# EUROPEAN PATENT APPLICATION

(11) **EP 4 748 548 A1**
(43) Date of publication of application: **27.05.2026**
(21) Application number: 25210835.2
(22) Date of filing: 23.10.2025
(51) Int. Cl.: B29C 45/00, B29C 45/16, B65D 47/10, B65D 47/12, B65D 47/20, B65D 75/58, B29C 70/76, B65D 47/08, B65D 47/14, B65D 5/74

(54) **SEALING UNIT, CONTAINER AND ASSEMBLY COMPRISING THE SAME, AND MANUFACTURING METHOD FOR SEALING UNIT**

(30) Priority: 25.11.2024 US 202418959232
(71) Applicant: Glenroy, Inc., Menomonee Falls, WI 53051 (US)
(72) Inventor: Gebbink, Jeroen Gerrit Anton, Menomonee Falls, 53051 (US); Minagawa-Webster, John, Menomonee Falls, 53051 (US)
(74) Representative: Arnold & Siedsma

(57) **Abstract**

Aspects of the present disclosure generally relate to a sealing unit for a container. The sealing unit comprises a body configured to be arranged on the container at a container opening thereof, wherein the body comprises a body opening configured to be arranged facing the container opening, a valve at least partially covering the body opening, a lid configured to be movable between a closed position, in which the lid seals the body opening with the valve between the body and the lid, and an open position, in which the valve is exposed, and a hinge for allowing the lid to move between the closed position and the open position. At least one of the body and the lid are made of a first material, and the valve and hinge are integrally formed and made of a second material, the second material being more flexible than the first material.

## Description

### FIELD

Aspects of the present disclosure generally relate to a sealing unit for a container. Aspects of the present disclosure further relate to a container comprising such a sealing unit, and an assembly comprising such a sealing unit. Aspects of the present disclosure further relate to a method for manufacturing such a sealing unit. The present disclosure is especially suitable for food and beverage containers.

### BACKGROUND

Containers, such as those for containing and dispensing food and/or beverages, are known in the art. Conventional containers include a container body in which contents, such as food or beverages, can be stored. The container body includes a container opening for dispensing the contents of the container body. Typically, a spout is attached to or integrally formed with the container body at the opening. The spout may have a spout element that defines a passage for the contents of the container. A sealing unit, such as a cap, may also be provided and may be configured to be releasably coupled to the spout to seal the passage of the spout.

A typical sealing unit may include a body and a lid connected by a hinge. Contents of the container can pass through an opening in the body when the lid is in an open position, whereas the opening in the body may be obstructed by the lid when the lid is in a closed position.

Document US 9 598 209 B1 describes, in its abstract, a food containment and dispensing system including a sealing unit, a spout and a collapsible pouch forming a cavity to contain a food product. A spout fitment is coupled to the collapsible pouch and includes a spout that extends from the collapsible pouch. A spout thread extends radially from the spout. The spout thread starts at a spout rib, which defines a spout rib contact surface. A cap is in threaded engagement with the spout, and it includes a cylindrical wall. The cap includes a living hinge allowing the cap to be a flip-top cap that is flipped open so that the food product may be delivered through a valve. Furthermore, a cap thread extends radially from the cylindrical wall and terminates at a cap rib, which defines a cap rib contact surface that is in contact with the spout rib contact surface to prevent further rotation of the cap with respect to the spout. A disadvantage of the known sealing unit is that the manufacturing process is relatively complex and requires a relatively large number of different steps and/or different materials. For instance, the living hinge is to be made from a first type of material only, like polypropylene material, in order to withstand the hinge movement over multiple uses without breaking. However, this first type of material generally cannot be used as valve material with the same functionality. Therefore the known food containment and dispensing system necessarily is a multi-material element. However, the use of a multi-material elements is to be avoided in view of the increasingly strict environmental requirements and the wish to reduce the number of waste streams when the food containment and dispensing system is at the end of its life time.

It is desirable to limit the number of individual manufacturing components and manufacturing steps for the sealing unit. For example, a larger number of components may increase its complexity and may also decrease the yield of the manufacturing process, as each component needs to be appropriately sized, positioned and connected. A larger number of manufacturing steps may increase the manufacturing time, potentially leading to increased costs.

It is also desirable to reduce the complexity of the assembly machine and relative cost of investment and/or to reduce the issue of waste disposal.

### SUMMARY

It is an object of the present disclosure to provide a sealing unit, a container and assembly including the same, and a method for manufacturing a sealing unit, in which at least one of the above-mentioned disadvantages has been reduced or even removed.

According to an aspect of the present disclosure, a sealing unit for a container is provided. The sealing unit comprises a body configured to be arranged on the container at a container opening thereof, wherein the body comprises a body opening configured to be arranged facing the container opening, a valve at least partially covering the body opening, a lid configured to be movable between a closed position, in which the lid seals the body opening with the valve between the body and the lid, and an open position, in which the valve is exposed, and a hinge for allowing the lid to move between the closed position and the open position. At least one of the body and the lid are made of a first material, and the valve and hinge are integrally formed and made of a second material, the second material being more flexible than the first material.

By forming the valve and hinge integrally of a flexible material, the number of manufacturing steps for the sealing unit can be reduced. This can in turn result in lower manufacturing costs, and higher yield and throughput. The number of individual components can also be reduced in accordance with the present disclosure.

Both the first material and the second material may be of the same material type. In this way a single material type sealing unit, herein also referred to as a mono material sealing unit, can be realized.

In embodiments of the present disclosure both the first material and the second material are thermoplastic elastomer materials. The first material and the second material may be polyethylene materials.

The body and the lid may have been integrally formed and coupled to one another via a coupling element of the first material. In that case, the coupling element may be separated into a first coupling portion integrally formed with the body and a second coupling portion integrally formed with the lid. Alternatively, the coupling element may be configured to separate into the first and second coupling portion by movement of the lid between the closed and open position.

The valve may be a slitted valve (also referred to as a slit valve). For example, the slitted valve may include a plurality of flaps formed by slitting the valve. The flaps may, in their resting position, seal or at least partially cover the opening in the body. However, when force is exerted, for example due to air pressure, the flaps may be pushed in one direction thereby allowing contents from the container to be dispensed through the opening in the body. In an example, the container to which the sealing unit is coupled may be compressible allowing the user to exert said force and dispense the contents of the container by compressing the container.

The valve may comprise a valve portion arranged at the opening, and a base portion configured to be arranged at or near a rim of the body opening.

The lid may comprise a valve stop protrusion configured to, when the lid is in the closed position, engage and seal the valve portion and/or at least partially prevent a valve operation of the valve portion.

The lid may comprise a sealing protrusion configured to, when the lid is in the closed position, engage the base portion to provide a substantially airtight seal. For example, the sealing protrusion may press on the base portion in a circumferential manner when the lid is in the closed position, thereby sealing an outer side of a passage through the opening of the body and through the valve.

The body may comprise coupling means for coupling the sealing unit to a spout arranged at the container opening. In a further embodiment, the coupling means may comprise a radially inward extending thread configured to releasably engage a corresponding radially outward extending thread of the spout in a rotating manner. In an even further embodiment, the coupling means may be further configured to engage an end protrusion at or near a base of the spout to prevent further rotation of the sealing unit with respect to the spout when the sealing unit is attached to the spout, thereby defining a predetermined orientation of the sealing unit with respect to the spout and the container when the sealing unit is coupled to the spout.

The lid may comprise a lid closing protrusion configured to engage a corresponding recess in the body when the lid is in the closed position.

According to another aspect of the present disclosure, a container, such as a food or beverage container, is provided. The container comprises a container body having an opening, a spout attached to the container body at the opening, and a sealing unit as defined in any of the embodiments described above, coupled to the spout with the body opening facing a passage of the spout.

According to yet another aspect of the present disclosure, an assembly is provided. The assembly comprises a container body having an opening a spout, and a sealing unit as defined in any of the embodiments described above.

According to yet another aspect of the present disclosure, a method for manufacturing a sealing unit as defined in any of the embodiments described above is provided. The method comprises the steps of a) providing a first mold part and a second mold part; b) performing injection-molding using the first mold part to form the body and the lid made of a first material; and c) performing injection-molding using the second mold part to form the valve and the hinge made of a second material, wherein the second material is more flexible than the first material. The first and second mold parts can be separate parts, but in other embodiments the first and second mold parts together form a single, integral mold.

By forming the valve and hinge integrally of a flexible material, the number of manufacturing steps for the sealing unit can be reduced. In accordance with the present disclosure, a two-step injection-molding process can be used to define at least the structure described above. This can in turn result in lower manufacturing costs, and higher yield and throughput. The number of individual components of the sealing unit can also be reduced in accordance with the present disclosure.

The second material may be a thermoplastic elastomer, 'TPE', material, for instance a TPE-E (or thermoplastic co-polyester, TPC) material.

Step b) may comprise integrally forming the body and the lid, the body and lid being integrally connected via a connecting portion. In that case, the method may further comprise removing or breaking said connecting portion after step b) or step c). Alternatively, the connecting portion may be configured to break when the lid of the sealing unit is moved between the first and second position. For example, due to the lower flexibility of the first material, the connecting portion may break during movement of the lid whereas the hinge, being made of the second material, is sufficiently flexible not to break during said movement.

Step c) may further comprise, after injection-molding using the second mold part, cutting the valve using a cutting element, preferably a slit knife, to form the valve, preferably a slitted valve. In a further embodiment, the method may further comprise providing a support element on which the valve is supported during the cutting of the valve.

The second mold part may be adapted for injection-molding the valve and the hinge on top of the body and the lid. This can ensure that the valve and the hinge are appropriately sized and positioned already during step c), which can improve the efficiency of the manufacturing method.

### BRIEF DESCRIPTION OF THE DRAWINGS

Next, the present disclosure will be described in more detail with reference to the appended drawings, wherein:
FIG. 1 is a perspective view of a container in accordance with an embodiment of the present disclosure;
FIG. 2 is an exploded view of a container in accordance with an embodiment of the present disclosure;
FIG. 3A is a perspective view of a top side of a spout in accordance with an embodiment of the present disclosure;
FIG. 3B is a perspective view of a bottom side of the spout of FIG. 3A;
FIG. 3C is a cross-sectional view of the spout of FIG. 3A, including a tamper evident seal;
FIG. 3D is a cross-sectional view of the spout of FIG. 3C, with the tamper evident seal removed;
FIG. 4A is a perspective view of a sealing unit in an open position in accordance with an embodiment of the present disclosure;
FIG. 4B is a perspective view of the sealing unit of FIG. 4A in a closed position;
FIG. 4C is an exploded view of the sealing unit of FIG. 4A;
FIGs. 5A-5D illustrate a method for manufacturing a sealing unit in accordance with an embodiment of the present disclosure; and
FIG. 6 is a perspective view of a cross-section of a sealing unit in combination with a spout in accordance with various embodiments of the present disclosure.

In the appended figures, identical or similar components and/or features may have been assigned the same reference sign for convenience of explanation. Moreover, if a first component is described with reference to an earlier figure and a second component in another figure is assigned the same reference sign, the description of said first component with reference to the earlier figure may identically or similarly apply to the second component with reference to the other figure, unless explicitly stated otherwise. For reasons of conciseness, the description for the first component may be omitted for the second component with reference to the other figure.

It is further noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope of the present invention. Any recited method can be carried out in the order of events recited or in any other order which is logically possible.

Unless the context clearly requires otherwise, throughout the description and the claims, the words "comprise", "comprising" and the like are to be construed in an inclusive sense, as opposed to an exclusive or exhaustive sense; that is to say, in the sense of "including, but not limited to". As used herein, the terms "connected", "coupled" or any variant thereof means any connection or coupling, either direct or indirect, between two or more elements. Additionally, the words "herein", "above", "below" and words of similar import, when used in this application, refer to this application as a whole and not to any particular portions of this application. Where the context permits, words in the detailed description using the singular or plural number may also include the plural or singular number respectively. The word "or" in reference to a list of two or more items, covers all of the following interpretations of the word: any of the items in the list, all of the items in the list, and any combination of the items in the list.

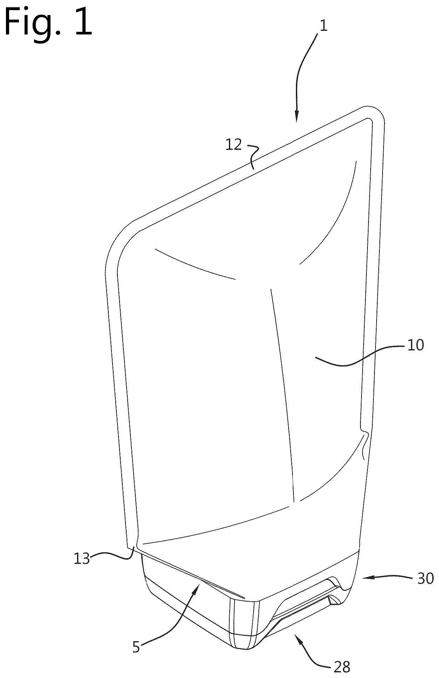

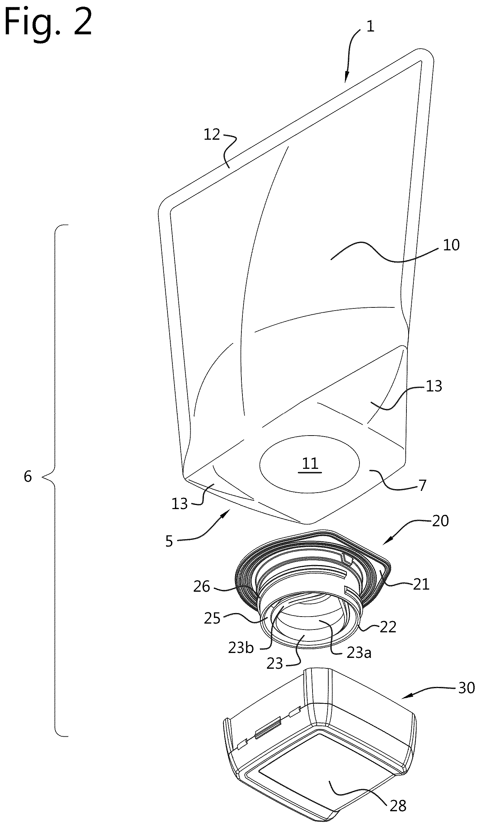

Figures 1 and 2 illustrate an assembly 6 comprising a container 1, a spout 20 and a spout sealing unit 30 in accordance with the present disclosure. For example, container 1 may be a food and beverage container, and may include a dispensing function.

In specific embodiments of the present disclosure the container 1 comprises a container body 10 provided at its dispensing end 5 with a (dispensing) opening 11. Container body 10 may be configured to store (i.e., contain) a product such as a food product or a beverage (i.e., liquid food) product. Hereinafter, reference is made to 'contents' of container 1, which may be construed as food or beverage, or other types of storable products.

In various embodiment, container body 10 may have an outer wall protecting the contents of container body 10 from an exterior of container 1, and an inner lining (not shown) that is suitable for being in contact with the contents of container 1. In the embodiments shown in the figures the container body 10 is comprised of a flexible pouch. A flexible pouch may be formed of a number of flexible films appropriately sealed to each other along container seals 12 and 13.

For instance, in embodiments of the present disclosure, the pouch may comprise a foil laminate, a laminar band or sheet of aluminum type foil, a monolayer extruded film, a multi-layered extruded film, a multi-layered laminated film, or a co-extruded film.

The container body 10 may further comprise an attachment portion 7 for attachment of the spout 20 to the container body 10. When the container body 10 is a flexible pouch, the spout 20 may be secured to one or more of the flexible films at the attachment portion 7 (for instance by welding), and then the flexible films may be appropriately folded to form the flexible pouch.

The spout sealing unit 30 (or, briefly, the sealing unit) may be mounted to the spout 20. In embodiments of the present disclosure the sealing unit 30 is configured to be releasably coupled to spout 20, for instance by screwing the sealing unit 30 onto the spout 20.

As shown in figures 1 and 2, spout 20 may be substantially tubular, though the present disclosure is not limited thereto. The spout 20 further defines a spout passage 29 for discharging the content of the container 1. Similarly, the sealing unit 30 comprises a sealing unit passage 40 for the same purpose. Both passages 29, 40 are arranged for dispensing content from container body 10 to an outside thereof, when the sealing unit is opened. When the spout 20 is attached to the container 1, the passage 29 is arranged in line with the container opening 11 so that the content of the container may be dispensed through the container opening 11 and the passage 29 inside the spout 20 (and the passage 40 inside the sealing unit).

The sealing unit 30 (herein also referred to as the cap) is configured to selectively open or seal the passage of spout 20 to thereby allow resp. prevent contents of container 1 from being dispensed through spout 20.

The user may completely remove sealing unit 30 to be able to dispense the contents of container 1. In various applications, however, sealing unit 30 may be further configured to be adjustable between an open position, in which the contents of container 1 can be dispensed via spout 20 and an opening in sealing unit 30, and a closed position, in which the contents cannot be dispensed due to spout 20 being sealed by sealing unit 30. In particular, sealing unit 30 may be configured to do so without having to decouple it from spout 20, allowing the user to leave sealing unit 30 coupled to spout 20.

In the above, container body 10 may be compressible. For example, container body 10 may be flexible so as to enable compression of container body 10. The user can engage container body 10 in a compressing manner to dispense the contents in container 1 through exerting pressure on container body 10.

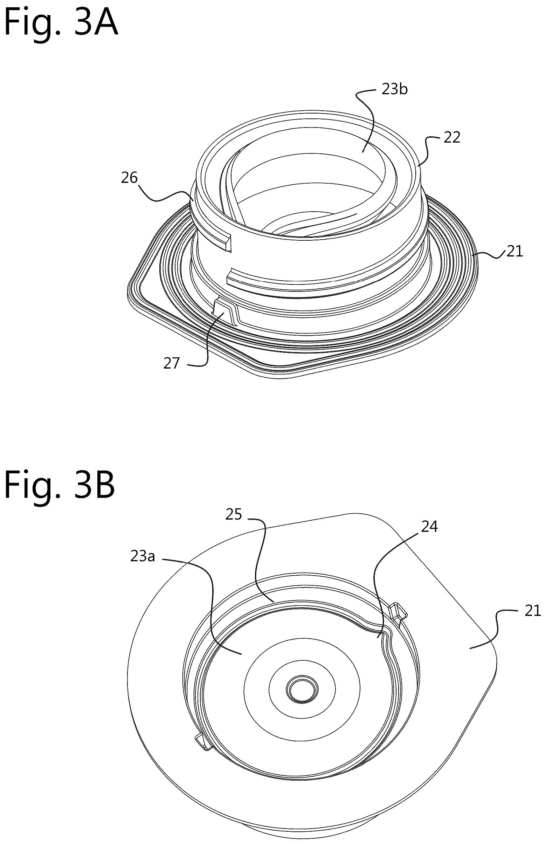

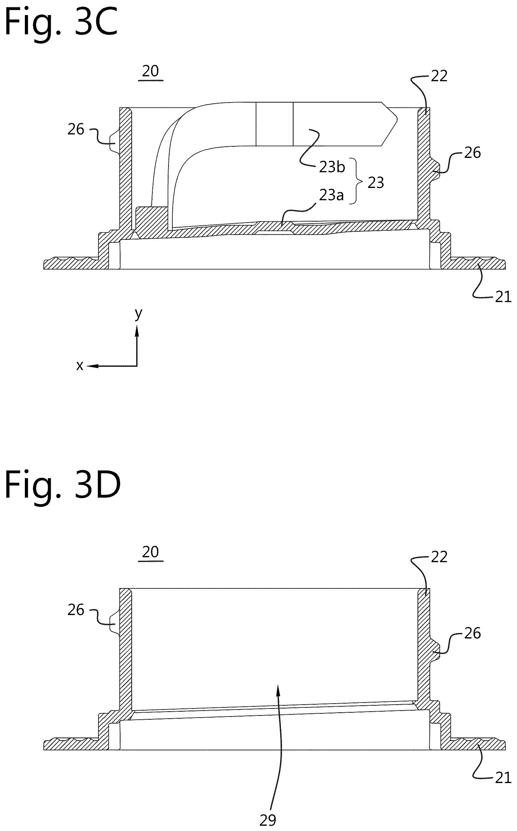

Figures 3A-3C illustrate spout 20 according to an embodiment of the present disclosure. In this embodiment, spout 20 includes a spout base 21 and a spout element 22. Spout element 22 defines a passage 29 through which the contents of the container can be dispensed. The spout element 22 and/or the passage provided therein generally extends in a first direction y with respect to spout base 21. Spout 20 further comprises a tamper evident seal 23 arranged in or on spout element 22, said tamper evident seal 23 including a sealing portion 23a and an engaging portion 23b.

Tamper evident seal 23 can be provided for the purpose of ensuring to the user that the contents of container 1 are not compromised by others. Before using container 1, the user may engage tamper evident seal 23 via engaging portion 23b, in this embodiment a pull ring, to remove it from spout 20 and free the passage of spout element 22 previously obstructed by sealing portion 23a.

As shown in figure 3C, sealing portion 23a of tamper evident seal 23 may be inclined with respect to a second direction *x* perpendicular to first direction *y*. Preferably, the angle between the second direction *x* and sealing portion 23a lies in a range between 0.1 - 10 degrees, more preferably 0.5 - 5 degrees, even more preferably about 2 degrees. Moreover, engaging element 23b is provided at or near a first side of a top surface of sealing portion 23a that is closer to spout base 21 than an opposing second side of said top surface, viewed in the first direction y. Preferably, said first side is a side that is closest to spout base 21, i.e., in the first direction y. This can allow the user to remove tamper evident seal 23 with less force due to a higher point-concentrated load that is exerted on sealing portion 23a when the user engages engaging portion 23b.

Spout 20 may be fixedly attached to container body 10 or may even be integrally formed therewith. For example, spout base 21 may be fixed to (attachment portion 7 of) container body 10 through ultrasonic welding, though the present disclosure is not limited thereto. Spout 20 may be arranged at container opening 11 with the passage of spout element 22 facing said container opening 11 to allow dispensing the contents of container body 10 through container opening 11 and spout element 22.

Sealing portion 23a of tamper evident seal 23 may include a radially outward extending protrusion 24. This configuration can allow the user to more easily remove tamper evident seal 23 from spout element 22 when applying force to engaging portion 23b. This may be especially beneficial when combined with the inclination of sealing portion 23a with respect to the second direction *x* and the corresponding position of engaging portion 23b, as it further increases the point-concentrated load that the user is able to exert on sealing portion 23a simply by applying force to engaging portion 23b.

In an example, spout element 22 may include a rim 25 inside the passage to which sealing portion 23a can be attached during manufacturing. Sealing portion 23a may for example be attached through welding or using an adhesive material.

Spout 20 may further comprise a radially outwards extending thread 26. Thread 26 may be spiral-shaped, so as to allow a sealing unit (not shown), such as a cap, to rotatably engage it via its own corresponding thread. In doing so, said sealing unit may effectively be releasably coupled with spout 20 and may seal the passage of spout element 22 to preserve the contents of container 1 and prevent any dispensing action. To that end, the sealing by said sealing unit may be substantially airtight.

In a further embodiment, spout 20 may include an end protrusion 27 which prevents rotation of the sealing unit with respect to spout 20 beyond a certain degree of rotation. End protrusion 27 may be arranged such that, when the sealing unit engages end protrusion 27 and is disallowed from further rotation, the sealing functionality of sealing unit is or has already been obtained. End protrusion 27 in that case can provide direct feedback to the user that the sealing unit is coupled sufficiently well to spout element 22 and can simultaneously fix an orientation of the sealing unit with respect to spout 20 and therefore also with respect to container body 10, for example for aesthetic reasons.

Spout base 21 may have an asymmetric shape as shown in figure 3A. In combination with end protrusion 27, this allows a manufacturer to fix spout 20 to container body 10 with a predetermined orientation while simultaneously ensuring that the sealing unit will also be in a predetermined orientation with respect to container body 10. Spout base 21 and spout element 22 may be integrally formed, or may be attached to one another, for example through welding, adhesive material, or the like.

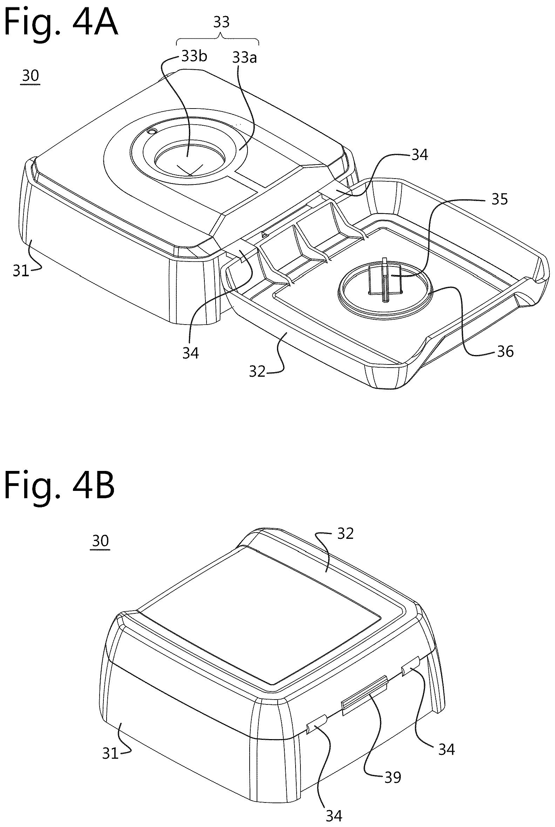

Figures. 4A-4C illustrate sealing unit 30 in accordance with an embodiment of the present disclosure. Sealing unit 30 includes a body 31, a lid 32, a valve 33 and a hinge 34.

The lid 32 has a support surface 28 configured to enable the container 1 to be inverted (i.e., the dispensing end 5 located below the opposite end of the container 1, with the lid 32 facing downward as illustrated in figures 1 and 2) and stably remain supported on a flat support circumferential edge 28 on a flat surface like a table or the like. Content of the container may be caused to move under the influence of gravity to the dispensing end 5 of the container 1. When it is desired to deliver the content from within the container 1, the sealing unit 30 may be opened (and the flexible container may be squeezed) to discharge the content through the passages 29, 40 in the spout and sealing unit 30, via the valve 33. Squeezing the flexible container 1 causes it to allowing the content of the container to be discharged essentially without creating a negative pressure inside container 1, thereby preventing the entry of ambient, potentially unsterile air inside the container 1.

The body 31 of the sealing unit 30 includes a body opening configured to face container opening 11 when coupled to spout 20. This allows the contents of container body 10 to be dispensed through container opening 11, spout 20 and through the body opening without having to remove or decouple sealing unit 30 from spout 20. Body 31 may have a smooth top surface for cleanability, for example if the contents of container body 10 partially spill on said top surface. Furthermore, body 31 may have curved sides for increased stiffness.

Lid 32 is coupled to body 31 via hinge 34 and is thereby able to move between an open position, as shown in figure 4A, and a closed position, as shown in figure 4B. In the open position, lid 32 allows the contents of container body 10 to be dispensed, whereas a passage from container body 10 to an exterior of container 1 is prevented when lid 32 is in the closed position. Lid 32 may have a flat top surface to allow the user to store container 1 more easily with said top surface facing an external surface, such as a shelf. This can prevent or mitigate the contents of container 1 becoming stuck to container body 10 opposite container opening 11.

Valve 33 may comprise a base portion 33a and a valve portion 33b and may be provided on a part of body 31, such as a recess in body 31. Here, base portion 33a may be supported by part of body 31 and valve portion 33b may be arranged above or in the body opening. In this embodiment, valve portion 33b is a slitted valve, including flaps which prevent or mitigate the contents of container body 10 from being dispensed unless pressure is exerted on the flaps, for example by compressing container body 10 as described with reference to figures 1 and 2. As will be appreciated by the skilled person, however, other types of valves for containers, in particular food or beverage containers, are not excluded from the scope of the present disclosure and are equally envisaged.

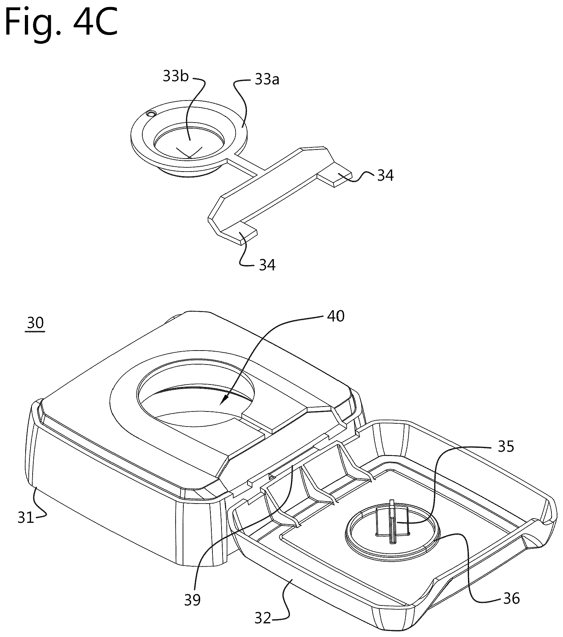

Body 31 and/or lid 32 are made of a first material. Furthermore, as shown in figures 4A and 4C, valve 33 and hinge 34 may be integrally formed of a second material. The second material may be more flexible than the first material. For example, the second material may be a thermoplastic elastomer (TPE) material, whereas the first material may be hard plastic.

Lid 32 may further comprise a valve stop protrusion 35 arranged to face valve portion 33b when lid 32 is moved to the closed position. Valve stop protrusion 35 is configured to prevent or at least mitigate the contents of container body 10 from being dispensed through valve portion 33b even when pressure is exerted. Additionally, or alternatively, lid 32 may further comprise a sealing protrusion 36 arranged to engage base portion 33a when lid 32 is moved to the closed position. Sealing protrusion 36 and base portion 33a may together form a substantially airtight seal.

Body 31 and lid 32 may have been integrally formed. In the process of integrally forming body 31 and lid 32 a coupling element 39 is created that temporarily couples body 31 and lid 32. Coupling element 39 may become separated or broken either during manufacturing or during use by the user, for example due to lid 32 being repeatedly moved between the first and second position. Consequently, after separation, coupling element 39 may have been formed into a first coupling portion integrally formed with body 31 and a separate second coupling portion integrally formed with lid 32 and spaced apart from the first coupling portion. In particular, coupling element 39 may have been formed in a injection molding process wherein firstly a first part, i.e. either the body 31 or lid 32 (in practice often the lid 32), is formed by injecting a molten material in a mold 50, whereafter the molten material flows further into the mold so as to create the other, second part (in practice often the body 31). The coupling element 39 is then the remnant of the material in a channel in the mold bridging the cavities wherein the body 31 and lid 32 are formed. In other words, the body 31 and lid 32 are formed in one injection molding step. Directly after the injection molding step the body 31 and lid 32 are interconnected by the coupling element 39. The interconnection is temporarily only since the coupling element 39 will tend to break when in use.

Of course, body 31 and lid 32 may also be manufactured separately and then combined to be coupled by hinge(s) 34.

The embodiments of spout 20 as described with reference to figures 3A-3C and the embodiments of sealing unit 30 as described with reference to figures 4A-4C may be combined in a same container 1. However, the present disclosure is not limited thereto. Instead, spout 20 and sealing unit 30 could equally be seen as separate aspects of the present disclosure. A container according to the present disclosure may include spout 20 and a conventional sealing unit, or sealing unit 30 and a conventional spout, or may include both spout 20 and sealing unit 30.

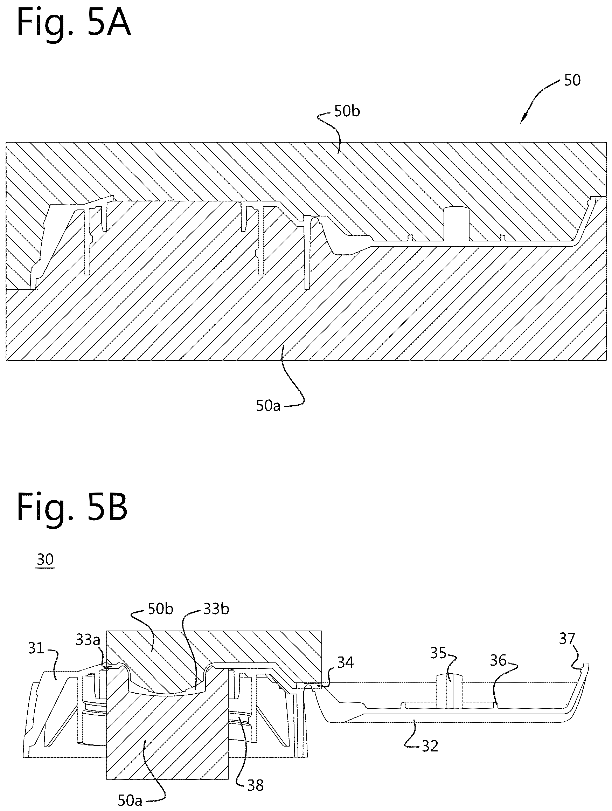

Next, a method for manufacturing sealing unit 30 will be described with reference to figures 5A-5D. According to a preferred embodiment the method involves 2k injection molding. In 2k injection molding two different material components (in this case materials of the same material type, but with different composition in order to provide different characteristics, such as level of flexibility/stiffness) are injected in a mold, the one shortly after the other. The first material component is selected to be or become relatively stiff, while the second material component is or will become (after curing) relatively flexible. After curing the materials of the first material component and the second material component will be bonded together (by a chemical and/or mechanical bond).

In the first step shown in figure 5A, a mold 50 comprising a first mold part 50a and a second mold part 50b is provided, and an injection-molding process is applied by injecting material of a first material component to form body 31, lid 32, and optionally coupling element 39 of the first material. At this stage, the opening of the body is also already formed, and any optional features of body 31 and/or lid 32 are formed, such as valve stop protrusion 35 and/or sealing protrusion 36, and/or the recess in body 31 for valve 33. Figure 5A also illustrates that body 31 is formed including a radially inward extending thread 38 for coupling sealing unit 30 to spout 20. Of course, a direction in which thread 38 extends depends on the direction in which the corresponding thread of spout 20 extends, and their directions may be swapped.

In the second step shown in figure 5B, material of a second material component (softer than the first material component) is injected in the mold 50 in order to integrally form valve 33 and hinge 34. In embodiments of the present invention, the mold 50 may include a bottom portion and a top portion configured to allow the distance between the bottom and top portion to be adjusted to control a thickness of valve 33 and/or hinge 34. In the embodiment shown in figure 5B two exchangeable mold inserts are depicted (more specifically, an upper mold insert as portion of the first, upper mold part 50b and a lower mold insert as portion of the second, lower mold part 50a) that are exchangeable so that the valve size can be easily modified by replacing one or more of the mold inserts by different mold inserts).

Referring to figure 5B, the mold insert of the second mold part 50b may be at least partially inserted into the body opening during the injection-molding process to form valve 33 directly on body 31.

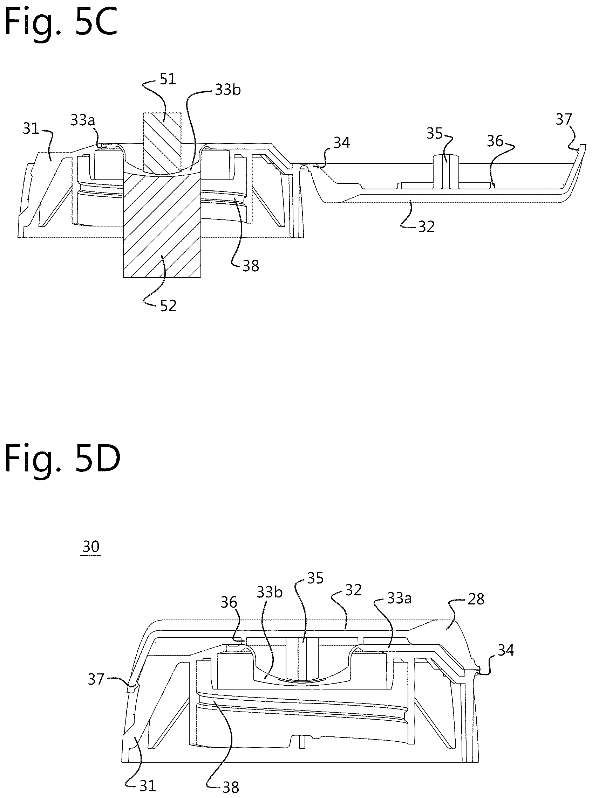

In figure 5C, wherein the situation is shown wherein the sealing unit has been removed from the mold 50, a support element 52 is provided in the body opening to support valve portion 33b, and a cutting element 51 is applied to valve portion 33b to form the valve. For example, cutting element 51 is a slit knife and is configured to cut valve portion 33b to form a slitted valve (or slit valve).

Finally, in figure 5D, lid 32 is moved to the closed position. Here, it is illustrated how base portion 33a and sealing protrusion 36 together form an airtight seal, and how valve stop protrusion 35 is positioned at or near valve portion 33b.

As shown in figure 5A-5D, lid 32 may be formed to have a lid closing protrusion 37 which is configured to releasably engages part of body 31 in the closed position, for example in a clicking manner, to ensure the airtight seal is maintained even when container 1 is stored for future use. The user can move lid 32 to the open position after releasing lid closing protrusion 37 from body 31.

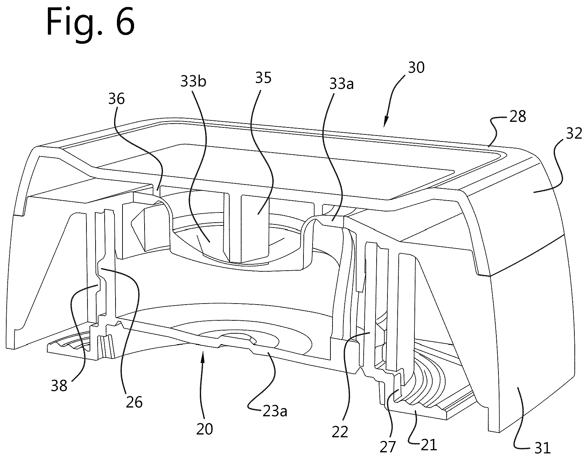

Figure 6 illustrates spout 20 and sealing unit 30 when coupled to one another, in accordance with an embodiment of the present disclosure. As shown in figure 6, thread 26 of spot 20 and thread 38 of sealing unit 30 have engaged in a rotating manner to couple sealing unit 30 to spout 20. End protrusion 27 of spout 20 prevents further rotation of sealing unit 30. For convenience of illustration, engaging portion 23b of tamper evident seal 23 is not shown in figure 6.

In the above, the present disclosure has been described using detailed embodiments thereof. However, the present disclosure is not limited to these embodiments. Instead, as will be appreciated by the skilled person, various modifications are possible without deviating from the scope of the present disclosure as defined by the appended claims and, depending on the jurisdiction, their equivalents.

Embodiments of the present disclosure can relate to one of the enumerated example embodiment (EEEs) listed below.

EEE 1. A sealing unit for a container, comprising:
a body configured to be arranged on the container at a container opening thereof, wherein the body comprises a body opening configured to be arranged facing the container opening;
a valve at least partially covering the body opening;
a lid configured to be movable between a closed position, in which the lid seals the body opening with the valve between the body and the lid, and an open position, in which the valve is exposed; and
a hinge for allowing the lid to move between the closed position and the open position,
wherein at least one of the body and the lid are made of a first material, and wherein the valve and hinge are integrally formed and made of a second material, the second material being more flexible than the first material.

EEE 2. The sealing unit according to EEE 1, wherein the both the first material and the second material are of the same material type.

EEE 3. The sealing unit according to EEE 1 or 2, wherein the first material is a high-density polyethylene, 'HDPE', and/or the second material is a thermoplastic elastomer, 'TPE' or thermoplastic co-polyester, 'TPC'..

EEE 4. The sealing unit according to any of the previous EEEs, wherein the body and the lid were integrally formed and coupled to one another via a coupling element of the first material,
wherein the coupling element is separated into a first coupling portion integrally formed with the body and a second coupling portion integrally formed with the lid, or wherein the coupling element is configured to separate into the first and second coupling portion by movement of the lid between the closed and open position.

EEE 5. The sealing unit according to any of the previous EEEs, wherein the valve is a slitted valve.

EEE 6. The sealing unit according to any of the previous EEEs, wherein the valve comprises a valve portion arranged at the opening, and a base portion configured to be arranged at or near a rim of the body opening.

EEE 7. The sealing unit according to EEE 6, wherein the lid comprises a valve stop protrusion configured to, when the lid is in the closed position, engage and seal the valve portion and/or at least partially prevent a valve function of the valve portion.

EEE 8. The sealing unit according to EEE 6 or 7, wherein the lid comprises a sealing protrusion configured to, when the lid is in the closed position, engage the base portion to provide a substantially airtight seal.

EEE 9. The sealing unit according to any of the previous EEEs, wherein the body comprises coupling means for coupling the sealing unit to a spout arranged at the container opening.

EEE 10. The sealing unit according to EEE 9, wherein the coupling means comprise a radially inward extending thread configured to releasably engage a corresponding radially outward extending thread of the spout in a rotating manner.

EEE 11. The sealing unit according to EEE 10, wherein the coupling means is further configured to engage an end protrusion at or near a base of the spout to prevent further rotation of the sealing unit with respect to the spout when the sealing unit is attached to the spout, thereby defining a predetermined orientation of the sealing unit with respect to the spout and the container when the sealing unit is coupled to the spout.

EEE 12. The sealing unit according to any of the previous EEEs, wherein the lid comprises a lid closing protrusion configured to engage a corresponding recess in the body when the lid is in the closed position.

EEE 13. A container, such as a food or beverage container, comprising:
a container body having an opening;
a spout attached to the container body at the opening; and
a sealing unit as defined in any of the previous EEEs, coupled to the spout with the body opening facing a passage of the spout.

EEE 14. An assembly, comprising:
a container body having an opening;
a spout; and
a sealing unit as defined in any of the EEEs 1-12.

EEE 15. A method for manufacturing a sealing unit as defined in any of the EEEs 1-12, comprising:
a) providing a first mold part and a second mold part;
b) performing injection-molding using the first mold part to form the body and the lid made of a first material; and
c) performing injection-molding using the second mold part to form the valve and the hinge made of a second material,
wherein the second material is more flexible than the first material.

EEE 16. The method according to EEE 15, wherein the second material is a thermoplastic elastomer, 'TPE', material.

EEE 17. The method according to EEE 15 or 16, wherein the first material is a plastic material.

EEE 18. The method according to any of the EEEs 15-17, wherein step b) comprises integrally forming the body and the lid, the body and lid being integrally connected via a connecting portion,
the method further comprising removing or breaking said connecting portion after step b) or step c), or wherein the connecting portion is configured to break when the lid of the sealing unit is moved between the first and second position.

EEE 19. The method according to any of the EEEs 15-18, wherein step c) further comprises, after injection-molding using the second mold part, cutting the valve using a cutting element, preferably a slit knife, to form the valve, preferably a slitted valve.

EEE 20. The method according to EEE 19, further comprising providing a support element on which the valve is supported during the cutting of the valve.

EEE 21. The method according to any of the EEEs 15-20, wherein the second mold part is adapted for injection-molding the valve and the hinge on top of the body and the lid.

### LIST OF REFERENCE NUMBERS

- 1: container
- 5: dispensing end
- 6: assembly
- 7: attachment portion for spout
- 10: container body
- 11: container opening
- 12, 13: container seals
- 20: spout
- 21: spout base
- 22: spout element
- 23: tamper evident seal
- 23a: sealing portion
- 23b: engaging portion
- 24: protrusion
- 25: rim
- 26: thread
- 27: end protrusion
- 28: flat support circumferential edge
- 30: sealing unit
- 31: body
- 32: lid
- 33: valve
- 33a: base portion
- 33b: valve portion
- 34: hinge
- 35: valve stop protrusion
- 36: sealing protrusion
- 37: lid closing protrusion
- 38: thread
- 39: coupling element
- 40: passage in sealing unit
- 50a: first mold
- 50b: second mold
- 51: cutting element
- 52: support element

## Claims

1. A sealing unit for a container, comprising:
a body configured to be arranged on the container at a container opening thereof, wherein the body comprises a body opening configured to be arranged facing the container opening;
a valve at least partially covering the body opening;
a lid configured to be movable between a closed position, in which the lid seals the body opening with the valve between the body and the lid, and an open position, in which the valve is exposed; and
a hinge for allowing the lid to move between the closed position and the open position,
wherein at least one of the body and the lid are made of a first material, and wherein the valve and hinge are integrally formed and made of a second material, the second material being more flexible than the first material.

2. The sealing unit according to claim 1, wherein the both the first material and the second material are of the same material type.

3. The sealing unit according to claim 1 or 2, wherein the first material is a high-density polyethylene, 'HDPE', and/or the second material is a thermoplastic elastomer, 'TPE' or thermoplastic co-polyester, 'TPC'.

4. The sealing unit according to any of the previous claims, wherein the body and the lid were integrally formed and coupled to one another via a coupling element of the first material,
wherein the coupling element is separated into a first coupling portion integrally formed with the body and a second coupling portion integrally formed with the lid, or wherein the coupling element is configured to separate into the first and second coupling portion by movement of the lid between the closed and open position.

5. The sealing unit according to any of the previous claims, wherein the valve is a slitted valve.

6. The sealing unit according to any of the previous claims, wherein the valve comprises a valve portion arranged at the opening, and a base portion configured to be arranged at or near a rim of the body opening, wherein the lid optionally comprises a valve stop protrusion configured to, when the lid is in the closed position, engage and seal the valve portion and/or at least partially prevent a valve function of the valve portion and/or wherein the lid optionally comprises a sealing protrusion configured to, when the lid is in the closed position, engage the base portion to provide a substantially airtight seal.

7. The sealing unit according to any of the previous claims, wherein the body comprises coupling means for coupling the sealing unit to a spout arranged at the container opening, wherein the coupling means optionally comprise a radially inward extending thread configured to releasably engage a corresponding radially outward extending thread of the spout in a rotating manner, wherein the coupling means is optionally configured to engage an end protrusion at or near a base of the spout to prevent further rotation of the sealing unit with respect to the spout when the sealing unit is attached to the spout, thereby defining a predetermined orientation of the sealing unit with respect to the spout and the container when the sealing unit is coupled to the spout.

8. The sealing unit according to any of the previous claims, wherein the lid comprises a lid closing protrusion configured to engage a corresponding recess in the body when the lid is in the closed position.

9. A container, such as a food or beverage container, comprising:
a container body having an opening;
a spout attached to the container body at the opening; and
a sealing unit as defined in any of the previous claims, coupled to the spout with the body opening facing a passage of the spout.

10. An assembly, comprising:
a container body having an opening;
a spout; and
a sealing unit as defined in any of the claims 1-8.

11. A method for manufacturing a sealing unit as defined in any of the claims 1-8, comprising:
a) providing a first mold part and a second mold part;
b) performing injection-molding using the first mold part to form the body and the lid made of a first material; and
c) performing injection-molding using the second mold part to form the valve and the hinge made of a second material,
wherein the second material is more flexible than the first material.

12. The method according to claim 12, wherein the second material is a thermoplastic elastomer, 'TPE', material and/or wherein the first material is a plastic material.

13. The method according to any of the claims 11-12, wherein step b) comprises integrally forming the body and the lid, the body and lid being integrally connected via a connecting portion,
the method further comprising removing or breaking said connecting portion after step b) or step c), or wherein the connecting portion is configured to break when the lid of the sealing unit is moved between the first and second position; .

14. The method according to any of the claims 11-13, wherein step c) further comprises, after injection-molding using the second mold part, cutting the valve using a cutting element, preferably a slit knife, to form the valve, preferably a slitted valve, optionally comprising providing a support element on which the valve is supported during the cutting of the valve.

15. The method according to any of the claims 11-14, wherein the second mold part is adapted for injection-molding the valve and the hinge on top of the body and the lid.
